# EUROPEAN PATENT SPECIFICATION

(11) **EP 2 630 296 B1**
(45) Date of publication and mention of the grant of the patent: **14.02.2018**
(21) Application number: 11833921.7
(22) Date of filing: 17.10.2011
(51) Int. Cl.: D21H 11/18, D21H 11/20, D21C 9/00, D21C 5/00, D21B 1/02, B02C 13/00, D21C 5/02

(54) **PROCESSING OF WOOD FIBRE FRACTION**
VERARBEITUNG VON HOLZFASERFRAGMENTEN
TRAITEMENT D'UNE FRACTION DE FIBRE DE BOIS

(30) Priority: 18.10.2010 FI 20106078
(43) Date of publication of application: 28.08.2013
(73) Proprietor: Ekokem-Palvelu Oy, 11120 Riihimäki (FI)
(72) Inventor: MÄENTAUSTA, Olli, FI-90230 Oulu (FI); HARINEN, Kalevi, FI-80100 Joensuu (FI); RÄSÄNEN, Kimmo, FI-80170 Joensuu (FI); ROUVINEN, Jari, FI-83430 Käsämä (FI); SOINI, Jaakko, FI-90540 Oulu (FI)
(74) Representative: Kolster Oy Ab
(86) International application number: PCT/FI2011/050901
(87) International publication number: WO 2012/052617

(56) References cited:
- EP-A1- 2 236 545
- EP-A1- 2 236 545
- WO-A1-2011/141877
- US-A1- 2004 168 783
- US-B1- 6 372 085
- US-B1- 6 372 085
- ISTVÁN SIRÓ ET AL: "Microfibrillated cellulose and new nanocomposite materials: a review", CELLULOSE, vol. 17, no. 3, 21 February 2010 (2010-02-21), pages 459-494, XP055068118, ISSN: 0969-0239, DOI: 10.1007/s10570-010-9405-y
- PAAKKO M ET AL: "Enzymatic Hydrolysis Combined with Mechanical Shearing and High-Pressure Homogenization for Nanoscale Cellulose Fibrils and Strong Gels", BIOMACROMOLECULES, AMERICAN CHEMICAL SOCIETY, US, vol. 8, 1 January 2007 (2007-01-01), pages 1934-1941, XP003026928, ISSN: 1525-7797, DOI: 10.1021/BM061215P [retrieved on 2007-05-03]
- PAAKKO M. ET AL.: 'Enzymatic Hydrolysis Combined with Mechanical shearing and High-Pressure Homogenization for Nanoscale Cellulose fibrils and strong Gels' BIOMACROMOLECULES vol. 8, January 2007, pages 1934 - 1941, XP003026928
- SIRO I. ET AL.: 'Microfibrillated cellulose and new nanocomposite materials: A review' CELLULOSE vol. 17, no. 3, June 2010, pages 459 - 494, XP055068118
- DATABASE CA [Online] 24 January 2012 XP003032701 Retrieved from STN Database accession no. 2010:847645 & JP 2010 150541 A (MITSUBISCHI CHEM CORP) 08 July 2010

## Description

### FIELD OF THE INVENTION

The invention relates to processing a wood fibre fraction.

### BACKGROUND OF THE INVENTION

Pulp manufacture is based on separating wood fibres contained in a wood **material** from one another. Pulp may be manufactured by a chemical pulp manufacturing process and/or a mechanical pulp manufacturing process. In the chemical pulp manufacture, wood chips are boiled in lye. In the mechanic pulp manufacture, wood fibres are detached from one another by means of mechanical stress by grinding or refining. A refining process may be enhanced by chemicals or heat, a grinding process by pressure.

Wood fibres lose some of their strength as they become shorter. Too short a fibre cannot be used in paper making, in which case they have to be separated and removed from the pulp. This results in waste material flows, which are recovered and used as a fuel for energy production of a pulp or paper mill.

A problem with the arrangement described above is that it has been impossible to utilize all waste and side flows generated in pulp and paper making for energy production and, further, their efficiency in energy production is poor.

### BRIEF DESCRIPTION OF THE INVENTION

An object of the invention is thus to provide a method and an arrangement so as to enable the aforementioned problems to be solved. The object of the invention is achieved by a method, a system, a wood fibre gel, a wood fibre product and a use which are characterized by what is stated in the independent claims. Preferred embodiments of the invention are disclosed in the dependent claims.

The present solution is based on processing a wood fibre fraction by performing biological or biochemical processing on the fraction, whereby one or more biocatalysts having a disintegrating influence on the structure of wood fibres and wood fibre bundles are added to the fraction for weakening the bonds between the wood fibres, and performing physical processing on the fraction whereby, as a consequence of the physical processing, at least some of the wood fibres processed with a biocatalyst or not processed with a biocatalyst gellify, forming a gellified pulp, whereby the formed gellified pulp is recovered, whereby the wood fibre fraction comprises fibre containing waste generated in pulp or papermaking industry, wherein the biocatalyst comprises at least one of a living microbial growth, an enzyme produced by the living microbial growth when present in the fraction, a single enzyme, an enzyme mixture, and a mixture of several enzyme mixtures.

An advantage of the solution according to the invention is that it is environmentally friendly as it becomes possible to utilize unsuitable waste or corresponding flows generated in connection with pulp manufacture and/or paper manufacture more efficiently. This is because owing to its state, it is easier to think of potential practical uses for the gellified wood fibre containing material than for the original waste pulp.

### BRIEF DESCRIPTION OF THE FIGURES

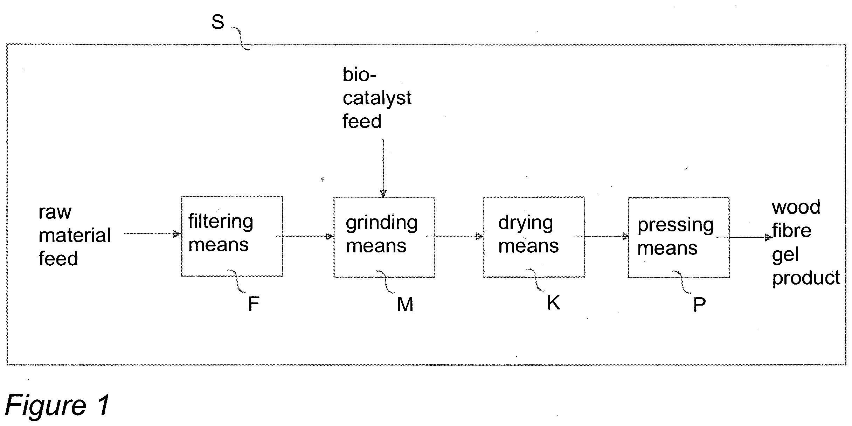

The invention is now described in closer detail in connection with preferred embodiments and with reference to the accompanying drawing, in which
Figure 1 illustrates a system according to an embodiment of the present solution.

### DETAILED DESCRIPTION OF THE INVENTION

A gel refers to a mixture wherein liquid is dispersed in an inner part of a porous solid matter. In a gel, solids may absorb liquid and swell. In a gel, the continuous phase (outer phase) is solid while the dispersed phase (inner phase) is liquid. Gels are semisolid products. Gels consist of a large molecular gellifier and liquid. Hydrogels consist of a gellifier and a hydrophilic medium (e.g. water).

According to the present solution, a wood fibre gel is produced when a fibre containing material is processed biologically or biochemically by means of a biocatalyst (such as an enzyme) as well as physically (e.g. mechanically in a counter impact mill or by ultrasound processing). However, the biological/biochemical processing is alternative (optional), i.e. a wood fibre gel may be achieved 1) as a result of "mere" physical processing or 2) as a result of physical processing and biological (or biochemical) processing. A fibre containing material used as the raw material may refer to pulp and paper industry waste, side and/or reject flows or any other suitable material containing wood and/or paper fibres. Examples of such fibre containing materials include i) fibrous clay, i.e. fibre containing sludge consisting of pulp and paper industry side flows, ii) OPA precipitate, i.e. a paper making side flow containing a coating material and reject fibre, and iii) flour, i.e. reject fibre unsuitable for paper making (e.g. too short a fibre which passes through a wire of a paper machine). The invention is not, however, intended to be restricted to these raw materials only, but the invention may also utilize any other at least partly gellifiable wood or paper fibre containing material.

Biological/biochemical processing may refer to influencing pulp properties by adding to the pulp a suitable amount of one or more active biocatalysts (e.g. an enzyme) and by allowing it/them to work in the pulp (become mixed therewith) in suitable conditions for a given period of time (e.g. an hour or more; e.g. about 1 to 2 hours). Enzyme activity may be directed e.g. at disintegrating the adhesive agents in fibre bundles contained in the pulp.

The influence of the biocatalyst processing may be enhanced by physical processing, wherein the biologically or biochemically processed pulp is fed to a so-called counter impact mill (it is also possible to omit the biocatalyst processing). Such a counter impact technique may be used for influencing the fibre bundles by disintegrating them and spreading the disintegrated fibre bundles uniformly within the pulp. The influence may be enhanced by repeating a cycle several times. Instead of a counter impact mill or a corresponding device, it is feasible to use any other device suitable for mechanically breaking the fibre bundles, such as an ultrasound device. The biological/biochemical step improves the efficiency of the physical step by influencing the bonds between the fibre bundles. In the physical step, the fibre bundles disintegrate, whereby enzyme activity is allowed to influence surfaces inside the fibre bundles.

It is also possible that a biocatalyst (enzyme(s)) is added to the pulp as late as during the physical (e.g. counter impact mill) processing, before or after it. The number of mechanical and/or enzymatic (biological, biochemical and/or physical) processing steps may be one or more, and the processings may have a given duration (e.g. about 1 to 2 hours). The processing may be a continuous process or a batch process, and it may include recycling of the biocatalyst (enzyme(s)) and/or the material being processed in order to enhance the processing.

A counter impact mill refers to one or more mills which are based on a rotor blade rotating in the same or different direction and which are suitable for breaking the bonds between fibres by producing a kind of tearing influence on the fibres. Instead of/in addition to a counter impact mill, the present solution may also utilize a ball mill or a stone mill.

As a result of the biological/biochemical and physical simultaneous or alternate processing (or "mere" physical processing), a wood fibre gel is achieved wherein microfibrils of the fibre containing pulp are located separately from one another and dispersed uniformly into a gel-like pulp. The gel-like pulp is suitable (after a possible water removal step) for use e.g. as an additional material in a pellet, a super capacitor electrode material, and in electromagnetic shielding. The properties of the wood fibre gel according to the present solution enable it to be utilized e.g. in the following applications:
a) electronics industry
   - electromagnetic shielding (EMI shielding)
   - super capacitor
   - antistatic materials
b) construction industry
   - building boards
   - thermal boards
   - antistatic materials
c) energy industry
   - additional material for a fuel pellet
   - other biofuel applications
d) • nanotechnology applications, such as (carbon) nanotubes, nanocomposites and functionalized carbon nanotubes.

An advantage of the present solution is the significant commercial potential of the wood fibre gel in the aforementioned applications. The raw material for the wood fibre gel is inexpensive, and it is available in abundance. Manufacturing costs are reasonable in proportion to the value of the applications. Instead, an unprocessed (non-gellified) wood fibre fraction is typically not applicable to these purposes.

Typically, the wood fibre gel obtained as a result of the physical and biocatalyst processing is dried, i.e. water is removed therefrom, making it strong enough for sheet manufacture carried out by pressing, for instance. The strength properties, electric insulating properties and thermal insulation properties of the gel improve clearly as compared with waste pulp (sludge) used as the raw material, even if this requires water removal and, when insulating properties are in question, additives to be blended with the gel as well. Gelation is clearly observable in approximation and by a microscope as compared with the appearance of the waste pulp used as the raw material since in the waste pulp liquid the fibres are randomly (non-uniformly, vaguely) dispersed in the pulp. In a gel, instead, the fibre is dispersed more homogenously (uniformly) in the material, whereby it is easier to think of potential uses for such a material. The gelation does not have to be complete but it may suffice that some of the wood fibres gellify.

In the present solution, the wood fibres may disintegrate such that single fibres are separated (detached) from other fibres, whereby microfibrils are formed. In the present solution, the wood fibres may also break down such that a single fibre is defibrated into a smaller one, whereby amorphous cellulose is formed. Thus, the physical bonds between the fibres and/or the physical bonds inside a fibre may disintegrate. Both manners of disintegration, together and/or separately, enhance gelation.

The present invention was developed in laboratory tests and test runs which were carried out in connection with corresponding materials and processings and wherein the purpose was to find practical uses for industrial side flows.

In a method according to an exemplary embodiment of the present solution, a wood fibre fraction is processed such that physical processing is performed on the fraction whereby, as a consequence of the physical processing, at least some of the wood fibres processed with a biocatalyst or not processed with a biocatalyst gellify, forming a gel-like pulp. The wood fibre fraction is processed in an alternative step such that the fraction is subjected to (e.g. prior to the physical processing) biological or biochemical processing, whereby one or more biocatalysts having a disintegrating influence on the structure of wood fibres and wood fibre bundles are added to the fraction for weakening the bonds between the wood fibres. The gel-like pulp formed is recovered.

According to an embodiment, the physical processing is based on kinetic energy applied to the wood fibre fraction non-uniformly in respect of time and place. According to an embodiment, the physical processing is based on strong solid and/or liquid material flows which are applied to the wood fibre fraction and which contain organic and/or inorganic microparticles and/or nanoparticles. According to an embodiment, the physical processing employs a ball mill, a stone mill, and/or a counter impact mill. According to an embodiment, the physical processing is based on defibrating the wood fibres in the fraction by means of rock and/or mineral particles contained in the fraction and/or added thereto. According to an embodiment, the particles comprise calcium carbonate particles (CaCO₃).

According to an embodiment, the physical processing is based on ultrasound, whereby ultrasound is applied to the wood fibre fraction in order to produce a gel-like pulp. According to an embodiment, the particles are separated from the gel-like pulp by dissolving the pulp into a solvent and separating the liquid phase from the pulp.

According to an embodiment, the biocatalyst comprises a living microbial growth and/or an enzyme produced by it when present in the fraction. According to an embodiment, the biocatalyst comprises a single enzyme, an enzyme mixture or a mixture of several enzyme mixtures. According to an embodiment, the biological or biochemical processing comprises steps of adding a chosen enzyme to the wood fibre fraction prior to feeding the fraction to a counter impact mill, allowing the enzyme to work for a given period of time, and running, after the given period of time, the enzyme containing wood fibre fraction through the counter impact mill (or ball mill/stone mill). According to an embodiment, the enzyme comprises one or more enzymes having a disintegrating influence on lignocellulose or the bonds between wood fibres.

According to an embodiment, the recovered gel-like pulp is used as a reinforcing material in composite structures. According to an embodiment, the recovered gel-like pulp is used as a matrix for particles having electromagnetic properties. According to an embodiment, the recovered gel-like pulp is used as a matrix for carbon nanotubes. According to an embodiment, the recovered gel-like pulp is used as a filler in a building material.

According to an embodiment, the recovered gel-like pulp contains cellulose microfibrils. According to an embodiment, the recovered gel-like pulp contains molecular and/or amorphous cellulose such that the recovered gel-like pulp is useful for the manufacture of nanocomposites. According to an embodiment, the wood fibre fraction comprises chemically, chemi-mechanically and/or mechanically produced cellulose pulp. According to an embodiment, the wood fibre fraction comprises waste or reject material from pulp or papermaking industry. According to an embodiment, the wood fibre fraction comprises fibrous clay, OPA precipitate, and/or flour. According to an embodiment, the wood fibre fraction comprises chemically, mechanically and/or chemi-mechanically produced fibre.

According to an embodiment, water is removed from the gel-like pulp. According to an embodiment, the water in the gel-like pulp is replaced by an organic solvent.

A system S for processing a wood fibre fraction according to an exemplary embodiment of the present solution comprises alternatively means for performing biological or biochemical processing on the fraction, whereby one or more biocatalysts having a disintegrating influence on the structure of wood fibres and wood fibre bundles are added to the fraction for weakening the bonds between the wood fibres, means M for performing physical processing on the fraction whereby, as a consequence of the physical processing, at least some of the wood fibres processed with a biocatalyst or not processed with a biocatalyst gellify, forming a gel-like pulp, and means for recovering the formed gel-like pulp.

According to an embodiment, the means for performing the physical processing comprise a ball mill, a stone mill, and/or a counter impact mill. According to an embodiment, the means for performing the physical processing comprise means for producing ultrasound and applying it to the wood fibre fraction in order to provide a gel-like pulp. In such a case, sonication is performed e.g. by a sonicator or an ultrasonicator, whereby ultrasound is used for applying energy to an object, enabling nano- and microparticles to be mixed with one another, for instance.

An exemplary embodiment of the present solution comprises a wood fibre gel produced by the aforementioned method. An exemplary embodiment of the present solution comprises a wood fibre containing product comprising a wood fibre gel produced by the aforementioned method, water having been removed from the wood fibre gel. An exemplary embodiment of the present solution comprises a use of a wood fibre gel produced by the aforementioned method for the manufacture of a nanotube, a fuel pellet, a super capacitor electrode, an electromagnetic shielding material, a building board, a thermal board, and/or an antistatic material.

In the present solution, the raw material, i.e. a wood fibre containing material, may contain a rock and/or mineral containing material, or the method comprises adding such a material to the wood fibre containing material. This results in a gel-like pulp comprising noncrystalline (amorphous) cellulose and/or microfibrils, i.e. the cellulose fibre is disintegrated into amorphous cellulose or microfibrils. Next, the rock and/or mineral containing material may be removed from the amorphous cellulose by dissolving it with a suitable solvent (such as sulphuric acid or hydrochloric acid). The rock and/or mineral containing material (the micro- and/or nanoparticles comprising it) in the wood fibre containing material enhances the disintegration of the wood fibre containing material into amorphous cellulose by enhancing the grinding influence.

Figure 1 illustrates a system S according to an embodiment of the present solution. Referring to Figure 1, the system S comprises a feed of the raw material, i.e. a pulp or paper mill waste flow, for instance, to filtering means F. The system S may comprise filtering means F configured to remove liquid from the feed flow, resulting in dried sludge. The system is configured to feed the dried sludge, which in this connection is also called a wood fibre fraction, to means M for physically processing the fraction, wherein the means may comprise e.g. a counter impact mill or a corresponding device suitable for grinding wood fibre bundles (grinding means M) or a device M for producing ultrasound and/or applying it to the fraction so as to process the fraction physically. The system S may further comprise a biocatalyst feed to the system for biological/biochemical processing of the fraction. The biocatalyst is mixed with the wood fibre fraction either during, before or after the physical processing. Figure 1 illustrates a situation wherein the biocatalyst is fed during grinding. After the physical and possibly biological/biochemical processing, the system may be configured to feed the formed wood fibre gel (gel-like pulp) to drying means K for the removal of water (or some of the water) from the wood fibre gel. The wood fibre gel, possibly having water removed therefrom, may be processed further e.g. by pressing means P, resulting e.g. in wood fibre gel containing sheets or bars. These may be further used for the manufacture of wood fibre gel containing products in construction or electronics industry, for instance.

In the present solution, various ligninolytic (i.e. wood delignifying) and/or softening enzymes and/or other enzymes having an influence on wood cells and fibres, such as pectinases, laccases, resinases, hemicellulases and/or cellulases, may be used, depending on the wood species. The amounts of enzyme to be used may depend on the wood species and quality of the raw material as well as on the enzyme used.

The present solution may be applied to processing the reject and side flows of the production of both chemical and mechanical pulp (TMP, cTMP, PGW). The present solution provides a method of processing a wood fibre fraction generated in connection with pulp making and unsuitable for papermaking into a form enabling better utilization for another purpose.

In future, as environmental permits and licences become stricter, it will be less acceptable to take any solid (fibre, lint) that has been removed from sludge prior to entry into a waste water purification plant to a waste dump. The present invention enables this waste which, for the time being, ends up in a waste dump to be utilized and pulp making to better conform with the ever-tightening environmental norms. It is also possible to decrease the waste water load caused by pulp making as it becomes possible to separate a material from the waste water for a practical use.

Paper fibres lose strength with each recycling. They become shorter and shorter until they are no longer suitable for paper making, in which case they have to be separated and removed from circulation. A single wood fibre can be recycled about 4 to 7 times. The present invention is also applicable to the utilization of unusable recycled paper since fibres unsuitable for recycling can be processed in accordance with the present invention.

A short fibre fraction unsuitable for paper making is not necessarily as such suitable to be burnt for energy production but some combustion enhancing material, such as peat, may be necessary to be added to the sludge prior to burning. The energy efficiency of the wood fibre containing sludge is rather poor. On the other hand, if the wood fibre containing sludge ends up in a waste water plant, this would be a problem to the waste water purification plant since as far as the waste water purification plant is concerned, wood fibres are difficult to purify from the waste water and they cause problems to the purification process. Consequently, the present solution is a very welcome alternative in processing and utilizing a wood fibre fraction.

Typically, in the formed gel-like pulp, some of the wood fibres have become gellified (gellified) but the pulp may also contain non-gellified wood fibres. In any case, the state of the formed gel-like pulp differs significantly from the original wood fibre fraction. Consequently, the method enables pulp mill waste liquid, for which it is otherwise difficult to find useful applications, to be processed into a state wherein it is easier to think of applications for the pulp (it is, among other things, compressible mechanically into a strong plate or tube, which is not possible when using non-processed pulp making waste liquid).

It is to be noted that in this connection the terms "wood fibre", "wood fibre containing", "wood fibre gel", etc. may also refer to paper fibre, paper fibre containing, paper fibre gel, etc., respectively.

In the technology according to the present solution, the raw material is thus other than the actual cellulose fibre. The raw material of the present solution, i.e. waste fibre, has been subjected to a separation phase wherein small fibre is separated, e.g. on a paper wire, from fibre to be supplied to the paper pulp.

A product according to the present solution, a wood fibre gel, differs from the prior art nano- and microcrystalline cellulose such that the product according to the present solution has a good binding capability, enabling it to be used for making a paper-like product. In addition, the wood fibre gel product according to the present solution has properties like those of nano- and microcrystalline cellulose, i.e. it contains small and microfibrillated fibre. A raw material according to a preferred embodiment comprises fibre containing waste generated in pulp and paper making. Basically, it is a different raw material than cellulose pulp. The wood fibre gel produced is a gel-like pulp which, however, has fibre-like properties, i.e. the fibres bind to one another. On the other hand, it has properties of the nano- and microcrystalline cellulose since it contains a large amount of small and microfibrillated fibre. These properties may be utilized in nanotechnological applications when nanoparticles are mixed with pulp in order to provide functional properties (e.g. electrical conductivity).

Thus, in the present solution, a version which is more "refined" than the ordinary cellulose pulp and which has been subjected to an additional separation process while passing through wires and screens used in pulp and/or papermaking is used as the raw material. In practice it is the small fibres and mineral particles that pass through the wire.

In the present solution, the production process (i.e. Enzymatic Mechanical Treatment or EMT processing) considerably differs from the prior art production of nano- and microcrystalline cellulose owing to the smaller energy consumption and lower costs of the present solution.

In the present solution, the product, i.e. wood fibre gel, differs from the prior art nano- and microcrystalline cellulose such that in the present solution the product is still fibrous or at least it contains fibre-like components that bind to one another. The prior art microcrystalline cellulose does not bind in a similar manner.

### Example 1

Waste fibre as such cannot be used for making paper sheets, or the strength of the sheets is extremely poor. The EMT processing improved the strength clearly.
Case 1: Waste pulp fibre content about 15%
   - Pulp 1.0 (no EMT processing): Sheet making unsuccessful, particle size 37.4 µm
   - Pulp 1.1 (EMT processed): tensile strength 13.7 kNm/kg, particle size 12.8 µm
   - Pulp 1.2 (EMT processed): tensile strength 13.1 kNm/kg, particle size 12.9 µm
Case 2: Waste pulp fibre content about 30%
   - Pulp 2.0 (no EMT processing): tensile strength 12.2 kNm/kg
   - Pulp 2.1 (EMT processed): tensile strength 30.2 kNm/kg
   - Pulp 2.2 (EMT processed): tensile strength 29.1 kNm/kg
   - Pulp 2.3 (EMT processed): tensile strength 29.1 kNm/kg.

### Example 2

EMT processing was performed on waste fibre, a combination of waste fibre and microcrystalline cellulose, and mere microcrystalline cellulose. Addition of microcrystalline cellulose reduced the strength as compared with waste fibre.
Waste fibre: Sheet making successful, tensile strength 30.2 kNm/kg
Waste fibre + microcrystalline cellulose (20%): Sheet making successful, tensile strength 23.0 kNm/kg
Microcrystalline cellulose: Sheet making unsuccessful, microcrystalline cellulose did not bind.

### Example 3

EMT processing was performed on waste fibre and waste fibre mixed with 10% and 20% carbon nanotubes (HNP), and test sheets were made wherefrom resistivity was measured.
Sheet 1 (waste fibre): not electrically conductive (resistivity infinite)
Sheet 2 (waste fibre + 10% HNP): resistivity ρ = (31.9 ± 3.2) • 10⁻³
Sheet 3 (waste fibre + 20% HNP): resistivity ρ = (8.7 ± 0.5) • 10⁻³.

## Claims

1. A method of processing a wood fibre fraction, **characterized in that** the method comprises
performing biological or biochemical processing on the fraction, whereby one or more biocatalysts having a disintegrating influence on the structure of wood fibres and wood fibre bundles are added to the fraction for weakening the bonds between the wood fibres;
performing physical processing on the fraction whereby, as a consequence of the physical processing, at least some of the wood fibres processed with a biocatalyst or not processed with a biocatalyst gellify, forming a gellified pulp, whereby the method comprises
recovering the formed gellified pulp;
whereby the wood fibre fraction comprises fibre containing waste generated in pulp or papermaking industry;
wherein the biocatalyst comprises at least one of a living microbial growth,
an enzyme produced by the living microbial growth when present in the fraction,
a single enzyme,
an enzyme mixture, and
a mixture of several enzyme mixtures.

2. A method as claimed in claim 1, **characterized in that** the physical processing is based on kinetic energy applied to the wood fibre fraction non-uniformly in respect of time and place.

3. A method as claimed in claim 1 or 2, **characterized in that** the physical processing is based on strong solid and/or liquid material flows which are applied to the wood fibre fraction and which contain organic and/or inorganic microparticles and/or nanoparticles.

4. A method as claimed in claim 1,2 or 3, **characterized in that** the physical processing utilizes a ball mill, a stone mill, and/or a counter impact mill.

5. A method as claimed in any one of the preceding claims 1 to 4, **characterized in that** the physical processing is based on defibrating the wood fibres in the fraction by means of mineral particles contained in the fraction and/or added thereto.

6. A method as claimed in claim 5, **characterized in that** the mineral particles comprise CaCO₃ particles.

7. A method as claimed in any one of the preceding claims 1 to 6, **characterized in that** the physical processing is based on ultrasound, whereby ultrasound is applied to the wood fibre fraction in order to produce a gellified pulp.

8. A method as claimed in claim 5 or 6, **characterized in that** the particles disclosed in the method are separated from the gellified pulp by dissolving the pulp into a solvent and separating the liquid phase from the pulp.

9. A method as claimed in any one of the preceding claims 1 to 8, **characterized in that** the biological or biochemical processing comprises the steps of
adding a chosen enzyme to the wood fibre fraction prior to feeding the fraction to a counter impact mill;
allowing the enzyme to work for a given period of time; and
running, after the given period of time, the enzyme containing wood fibre fraction through the counter impact mill.

10. A method as claimed in claim 9, **characterized in that** the enzyme comprises one or more enzymes having a disintegrating influence on lignocellulose or the bonds between wood fibres.

11. A method as claimed in any one of the preceding claims 1 to 10, **characterized in that** the recovered gellified pulp contains cellulose microfibrils.

12. A method as claimed in any one of the preceding claims 1 to 11, **characterized in that** the recovered gellified pulp contains molecular and/or amorphous cellulose such that the recovered gellified pulp is usable for manufacturing nanocomposites.

13. A method as claimed in any one of the preceding claims 1 to 12, **characterized in that** the wood fibre fraction comprises waste sludge generated in pulp and paper industry.

14. A method as claimed in any one of the preceding claims 1 to 13, **characterized in that** the wood fibre fraction comprises fibrous clay, OPA precipitate, and/or flour.

15. A method as claimed in any one of the preceding claims 1 to 14, **characterized in that** water is removed from the gellified pulp.

16. A method as claimed in any one of the preceding claims 1 to 15, **characterized in that** the water in the gellified pulp is replaced by an organic solvent.

## Patentansprüche

1. Verfahren zur Verarbeitung einer Holzfaserfraktion, **dadurch gekennzeichnet, dass** das Verfahren Folgendes umfasst
Durchführung einer biologischen oder biochemischen Verarbeitung der Fraktion, wobei ein oder mehrere Biokatalysatoren, die einen zersetzenden Einfluss auf die Struktur von Holzfasern und Holzfaserbündeln aufweisen, der Fraktion zugesetzt werden, um die Bindungen zwischen den Holzfasern zu schwächen;
Durchführung einer physikalischen Verarbeitung der Fraktion, wobei, als Folge der physikalischen Verarbeitung, mindestens ein Teil der Holzfasern, die mit einem Biokatalysator verarbeitet, oder nicht mit einem Biokatalysator wurde, unter Bildung eines gelierten Zellstoffs geliert, wobei das Verfahren Folgendes umfasst
Rückgewinnung des gebildeten gelierten Zellstoffs;
wobei die Holzfaserfraktion faserhaltige Abfälle umfasst, die in der Zellstoff- oder Papierindustrie entstehen;
wobei der Biokatalysator mindestens eines umfasst von
einem lebenden mikrobiellen Wachstum,
einem Enzym, das durch das lebende mikrobielle Wachstum erzeugt wird, wenn es in der Fraktion anwesend ist,
einem einzelnen Enzym,
einem Enzymgemisch und
einem Gemisch aus mehreren Enzymgemischen.

2. Verfahren nach Anspruch 1, **dadurch gekennzeichnet, dass** die physikalische Verarbeitung auf kinetischer Energie basiert, die auf die Holzfaserfraktion ungleichförmig in Bezug auf Zeit und Ort angewendet wird.

3. Verfahren nach Anspruch 1 oder 2, **dadurch gekennzeichnet, dass** die physikalische Verarbeitung auf starken festen und/oder flüssigen Materialströmen beruht, die auf die Holzfaserfraktion angewendet werden und organische und/oder anorganische Mikropartikel und/oder Nanopartikel enthalten.

4. Verfahren nach Anspruch 1, 2 oder 3, **dadurch gekennzeichnet, dass** die physikalische Verarbeitung eine Kugelmühle, eine Steinmühle und/oder eine Gegenprallmühle verwendet.

5. Verfahren nach einem der vorstehenden Ansprüche 1 bis 4, **dadurch gekennzeichnet, dass** die physikalische Verarbeitung auf der Defibrierung der Holzfasern in der Fraktion mittels mineralischer Partikel, die in der Fraktion enthalten sind und/oder ihr zugesetzt werden, beruht.

6. Verfahren nach Anspruch 5, **dadurch gekennzeichnet, dass** die mineralischen Partikel CaCO₃-Partikel umfassen.

7. Verfahren nach einem der vorstehenden Ansprüche 1 bis 6, **dadurch gekennzeichnet, dass** die physikalische Verarbeitung auf Ultraschall beruht, wobei Ultraschall auf die Holzfaserfraktion angewendet wird, um einen gelierten Zellstoff zu erzeugen.

8. Verfahren nach Anspruch 5 oder 6, **dadurch gekennzeichnet, dass** die in dem Verfahren offenbarten Partikel von vom gelierten Zellstoff durch Lösen des Zellstoffs in ein Lösungsmittel und Abtrennen der flüssigen Phase vom Zellstoff getrennt werden.

9. Verfahren nach einem der vorstehenden Ansprüche 1 bis 8, **dadurch gekennzeichnet, dass** die biologische oder biochemische Verarbeitung die folgenden Schritte umfasst
Zugabe eines ausgewählten Enzyms zu der Holzfaserfraktion vor der Zuführung der Fraktion zu einer Gegenprallmühle;
Wirken lassen des Enzyms für einen gegebenen Zeitraum; und
Laufen lassen, nach dem gegebenen Zeitraum, der das Enzym enthaltenden Holzfaserfraktion durch die Gegenprallmühle.

10. Verfahren nach Anspruch 9, **dadurch gekennzeichnet, dass** das Enzym ein oder mehrere Enzyme umfasst, die einen zersetzenden Einfluss auf die Lignocellulose oder die Bindungen zwischen Holzfasern aufweisen.

11. Verfahren nach einem der vorstehenden Ansprüche 1 bis 10, **dadurch gekennzeichnet, dass** der rückgewonnene gelierte Zellstoff Cellulose-Mikrofibrillen enthält.

12. Verfahren nach einem der vorstehenden Ansprüche 1 bis 11, **dadurch gekennzeichnet, dass** der rückgewonnene gelierte Zellstoff molekulare und/oder amorphe Cellulose enthält, so dass der rückgewonnene gelierte Zellstoff für die Herstellung von Nanokompositen verwendbar ist.

13. Verfahren nach einem der vorstehenden Ansprüche 1 bis 12, **dadurch gekennzeichnet, dass** die Holzfaserfraktion Abfallschlamm umfasst, der in der Zellstoff- und Papierindustrie entsteht.

14. Verfahren nach einem der vorstehenden Ansprüche 1 bis 13, **dadurch gekennzeichnet, dass** die Holzfaserfraktion faserigen Ton, OPA-Niederschlag und/oder Mehl umfasst.

15. Verfahren, nach einem der vorstehenden Ansprüche 1 bis 14, **dadurch gekennzeichnet, dass** dem gelierten Zellstoff das Wasser entzogen wird.

16. Verfahren nach einem der vorstehenden Ansprüche 1 bis 15, **dadurch gekennzeichnet, dass** das Wasser im gelierten Zellstoff durch ein organisches Lösungsmittel ersetzt wird.

## Revendications

1. Procédé de traitement d'une fraction de fibre de bois, **caractérisé en ce que** le procédé comprend
l'exécution d'un traitement biologique ou biochimique sur la fraction, de sorte qu'un ou plusieurs biocatalyseurs ayant une influence désagrégeante sur la structure de fibres de bois et de paquets de fibres de bois sont ajoutés à la fraction pour affaiblir les liaisons entre les fibres de bois ;
l'exécution d'un traitement physique sur la fraction de sorte que, en conséquence du traitement physique, au moins certaines des fibres de bois traitées avec un biocatalyseur ou non traité avec un biocatalyseur se gélifient, formant une pulpe gélifiée, de sorte que le procédé comprend
la récupération de la pulpe gélifiée formée ;
de sorte que la fraction de fibre de bois comprend de la fibre contenant des déchets produits dans l'industrie de fabrication du papier ou de pulpe ;
dans lequel le biocatalyseur comprend au moins l'un de une croissance microbienne vivante,
une enzyme produite par la croissance microbienne vivante quand présente dans la fraction,
une enzyme simple,
un mélange enzymatique, et
un mélange de plusieurs mélanges enzymatiques.

2. Procédé selon la revendication 1, **caractérisé en ce que** le traitement physique est basé sur l'énergie cinétique appliquée à la fraction de fibre de bois de façon non uniforme en termes de temps et de lieu.

3. Procédé selon la revendication 1 ou 2, **caractérisé en ce que** le traitement physique est basé sur des flux intenses de matière solide et/ou liquide qui sont appliqués à la fraction de fibre de bois et qui contiennent des microparticules et/ou des nanoparticules organiques et/ou inorganiques.

4. Procédé selon la revendication 1,2 ou 3, **caractérisé en ce que** le traitement physique utilise un broyeur à boules, un broyeur à pierres, et/ou un broyeur à choc inverse.

5. Procédé selon l'une quelconque des revendications précédentes 1 à 4, **caractérisé en ce que** le traitement physique est basé sur le défibrage des fibres de bois dans la fraction au moyen de particules minérales contenues dans la fraction et/ou ajoutées à celle-ci.

6. Procédé selon la revendication 5, **caractérisé en ce que** les particules minérales comprennent des particules de CaCO₃.

7. Procédé selon l'une quelconque des revendications précédentes 1 à 6, **caractérisé en ce que** le traitement physique est basé sur des ultrasons, de sorte que des ultrasons sont appliqués à la fraction de fibre de bois afin de produire une pulpe gélifiée.

8. Procédé selon la revendication 5 ou 6, **caractérisé en ce que** les particules révélées dans le procédé sont séparées de la pulpe gélifiée en dissolvant la pulpe dans un solvant et en séparant la phase liquide de la pulpe.

9. Procédé selon l'une quelconque des revendications précédentes 1 à 8, **caractérisé en ce que** le traitement biologique ou biochimique comprend les étapes consistant à
ajouter une enzyme choisie à la fraction de fibre de bois avant d'amener la fraction à un broyeur à choc inverse ;
permettre à l'enzyme de travailler pendant une période de temps donnée ; et
emmener, après la période de temps donnée, la fraction de fibre de bois contenant l'enzyme à travers le broyeur à choc inverse.

10. Procédé selon la revendication 9, **caractérisé en ce que** l'enzyme comprend une ou plusieurs enzymes ayant une influence désagrégeante sur la lignocellulose ou les liaisons entre des fibres de bois.

11. Procédé selon l'une quelconque des revendications précédentes 1 à 10, **caractérisé en ce que** la pulpe gélifiée récupérée contient des microfibrilles de cellulose.

12. Procédé selon l'une quelconque des revendications précédentes 1 à 11, **caractérisé en ce que** la pulpe gélifiée récupérée contient de la cellulose moléculaire et/ou amorphe de sorte que la pulpe gélifiée récupérée est utilisable pour fabriquer des nanocomposites.

13. Procédé selon l'une quelconque des revendications précédentes 1 à 12, **caractérisé en ce que** la fraction de fibre de bois comprend de la bourbe superflue produite dans l'industrie du papier et de la pulpe.

14. Procédé selon l'une quelconque des revendications précédentes 1 à 13, **caractérisé en ce que** la fraction de fibre de bois comprend de l'argile fibreuse, un précipité OPA, et/ou de la farine.

15. Procédé selon l'une quelconque des revendications précédentes 1 à 14, **caractérisée en ce que** de l'eau st enlevée de la pulpe gélifiée.

16. Procédé selon l'une quelconque des revendications précédentes 1 à 15, **caractérisé en ce que** l'eau dans la pulpe gélifiée est remplacée par un solvant organique.
